# EUROPEAN PATENT SPECIFICATION

(11) **EP 1 081 365 B1**
(45) Date of publication and mention of the grant of the patent: **14.06.2006**
(21) Application number: 00118745.9
(22) Date of filing: 30.08.2000
(51) Int. Cl.: F02D 41/40, F02D 41/30, F02D 41/12

(54) **Multiple injection control apparatus and fuel multiple injection control method for diesel engine**
Verfahren und Vorrichtung zur Regelung der Mehrfacheinspritzung in einer selbstgezündeten Brennkaftmaschine
Procédé et appareil pour le contrôle de l'injection multiple dans un moteur diesel

(30) Priority: 31.08.1999 JP 24558199
(43) Date of publication of application: 07.03.2001
(73) Proprietor: Toyota Jidosha Kabushiki Kaisha, Toyota-shi, Aichi-ken 471-8571 (JP); TOYODA AUTOMATIC LOOM WORKS, LTD., Kariya-Shi, Aichi-ken, 448-8671 (JP)
(72) Inventor: Tsuzuki, Naoyuki, Toyota-shi, Aichi-ken 471-8571 (JP); Sugiyama, Tatsumasa, Toyota-shi, Aichi-ken 471-8571 (JP); Hirano Takeshi,c/o TOYODA AUTOMATIC LOOM WORKS,Ltd, Aichi-ken, 448-8671 (JP)
(74) Representative: TBK-Patent

(56) References cited:
- EP-A- 0 824 186
- EP-A- 0 849 459
- EP-A- 0 859 138
- EP-A- 0 887 525

## Description

The present invention relates to a fuel injection control apparatus and a fuel injection control method for a diesel engine and, more particularly, to a control apparatus and a control method suitably applicable to a diesel engine wherein the injection of a main amount of fuel for producing the engine torque is preceded by the injection of a very small amount of fuel for forming a combustion environment that promotes ignition of fuel.

A known diesel engine fuel injection control apparatus performs fuel injection in a split manner, that is, performs a main fuel injection (main injection) for producing an engine torque and an injection of a very small amount of fuel (pilot injection) preceding the main injection for the purpose of reducing the combustion noise and improving the emission quality of a diesel engine, as described in, for example, Japanese Patent Application Laid-Open No. JP-A-11-148409. As a combustion environment for promoting ignition of fuel in a cylinder is formed by the injection of a very small amount of fuel before the main injection, the ignitability of fuel injected by the main injection is increased, so that ignition delay or pre-mixture combustion is curbed and combustion is stabilized. Therefore, the control apparatus is able to effectively reduce the combustion noise caused by the ignition delay and the amount of oxides of nitrogen (NOx) produced during the pre-mixture combustion.

However, since the fuel injection timing greatly affects the manner of subsequent combustion in diesel engines, it is necessary to perform the main injection at an appropriate timing that ensures good combustion so as to produce favorable engine torque. Furthermore, with regard to the pilot injection, it is necessary to inject fuel at an appropriate timing preceding the main injection for a duration such that an environment that increases the ignitability of fuel injected by the main injection is formed. Unless a proper amount of fuel (e.g., several cubic mm/st) is precisely injected during such a severely limited period, the pilot injection does not contribute to promotion of the ignition of main-injected fuel and, moreover, results in deteriorations in combustion noise and emission quality. Therefore, for successful execution of the above-described split injection, it is necessary to finely control the timing of fuel injection and the amount of fuel injected.

It should be noted herein that when a diesel engine is operated in a load/speed region that is higher than a certain level, sufficient ignitability is secured without a need to perform the pilot injection because during such a high-load/high-speed operation, the pressure in the cylinder and the compression end temperature (i.e., temperature in the cylinder at the top dead center of the piston) become sufficiently high. Therefore, the execution region of the aforementioned split injection (split injection region) is set based on the engine operational condition so that the split injection is executed only in a condition where it would otherwise be difficult to secure a good ignitability.

In an operational condition of a diesel engine where the engine revolution speed is excessively high relative to the amount of depression of an accelerator pedal, the engine revolution speed is reduced by gradually reducing the total amount of fuel injected (the sum of "amount of pilot injection" and "amount of main injection") and finally stopping the fuel injection.

During the transition to the stop of fuel injection or during restoration of fuel injection from the injection stop, the combustion environment in the cylinders sharply changes, and therefore there is a fear of causing a deterioration in combustion noise and occurrence of a torque fluctuation. Therefore, during such a transitional region, it is desirable that the changes of the combustion environment in the cylinders be curbed as much as possible.

However, during a transitional section between the fuel injection execution region and the injection stop region, even the above-described conventional diesel engine that performs the pilot injection is not able to fully exploit the advantages of the pilot injection due to below-stated circumstances, and is not able to sufficiently curb changes of the combustion environment in the cylinders. Therefore, problems associated with changes of the combustion environment cannot be fully resolved.

The technical background of the invention will be further described, in addition to the foregoing description.

According to the conventional art, it has been considered that execution of the pilot injection not followed by the main injection, that is, singular execution of the pilot injection while the main injection is stopped, is not merely meaningless, but has adverse effects on the operation of the engine. This conclusion is derived based on the following logic.

That is, it has been considered that "an independent pilot injection not followed by a main injection" is no different from "a main injection whose injection timing is excessively advanced". According to this concept, if the pilot injection is singly performed, fuel is uselessly injected at a timing that is unsuitable to the ignition or combustion of fuel and is unsuitable to engine torque production. As a result, fuel is meaninglessly wasted without contributing to production of an engine torque. Moreover, various problems occur, such as toque fluctuation, increased combustion noise, etc.

Therefore, in the conventional fuel injection control, the "singular execution of the pilot injection" is avoided during the transition between the "split injection region", in which the fuel injection is performed in a split manner, that is, the main injection and the pilot injection are performed, and the "fuel injection stop region", in which the fuel injection is stopped.

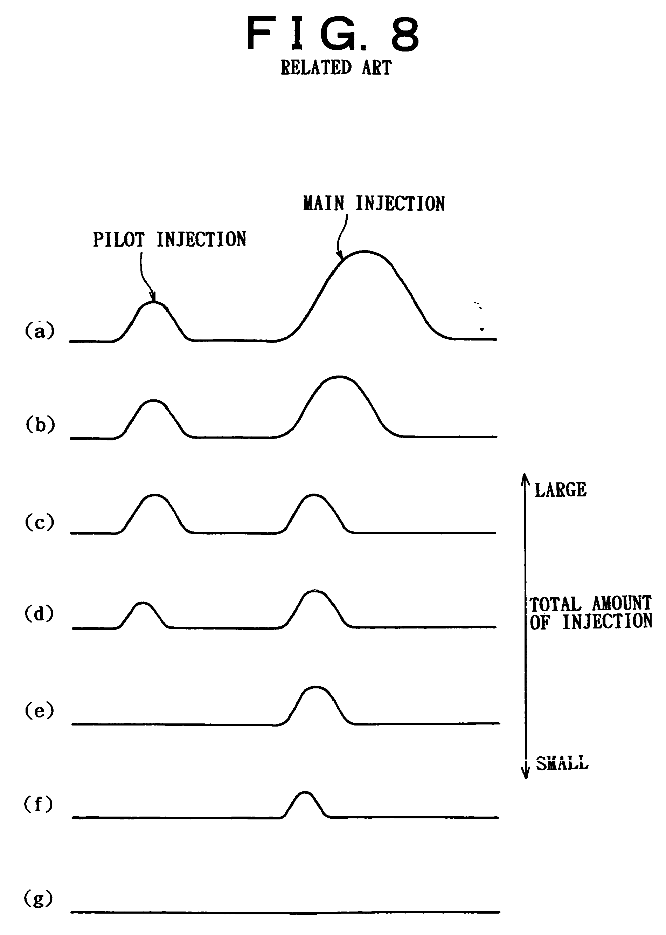

FIGS. 8(a) to 8(b) indicate an example of the manner of the fuel injection control associated with the transition between the "split injection region" and the "injection stop region".

In the example indicated in FIGS. 8(a) to 8(g), the amount of fuel injected is reduced until the injection is stopped, in the following manner. During the transition to the injection stop, the fashion of fuel injection is changed in the order of FIG. 8(a) to FIG. 8(g).
- The amount of main injection is gradually reduced while the amount of pilot injection needed to form the aforementioned good combustion environment is secured, until the total amount of fuel injection becomes approximately twice the amount of pilot injection [FIGS. 8(a) to 8(c)].
- After the total amount of fuel injection is reduced to about twice the amount of pilot injection, the amount of pilot injection is gradually reduced to "0" while the amount of main injection is maintained [FIG. 8(c) to 8(e)]. Thus, the pilot injection is stopped before the main injection.
- After the pilot injection is stopped, the amount of main injection is reduced again to eventually stop the main injection [FIGS. 8(e) to 8(g)].

For restoration of the fuel injection from the stop, the fashion of fuel injection is changed in an order opposite to the aforementioned order, that is, in the order of FIG. 8(g) to FIG. 8(a). That is, after the main injection is restarted, the pilot injection is restarted.

As can be seen from FIGS. 8(a) to 8(g), the "singular execution of the pilot injection" is considered to be totally out of the common sense in the conventional fuel injection control. Therefore, there is no known diesel engine that executes such pilot injection.

During a region between the "split injection region" and the "injection stop region", the aforementioned fuel injection control executes fuel injection based only on the main injection under a condition where a sufficient ignitability cannot be secured unless the pilot injection is performed, although such a condition is temporary. As a result, during the transition between those regions, the aforementioned problems, such as occurrence of torque fluctuation, increases in combustion noise, etc., occur. However, according to the common understanding, these problems have been considered to be inevitable since the "singular execution of the pilot injection" has been considered to be meaningless.

EP-A1-0 849 459 discloses a fuel injection control apparatus for a spark-ignition engine, that performs a main injection in which a main amount of fuel for producing an engine torque is injected, and a pilot injection in which a very small amount of fuel is injected, the fuel injection control apparatus comprises fuel injection control means for executing the fuel injection in different modes individually for a plurality of regions set in accordance with an operational condition of the engine, wherein the plurality of regions associated with execution of the fuel injection by the fuel injection control means include a split injection region in which the pilot injection is followed by the main injection; and an injection stop region in which the fuel injection in the engine is entirely stopped.

EP-A2-0 887 525 discloses a fuel injection control apparatus for a compression- ignition type engine. It performs split injection with main and pilot fuel injection in a high load operating region. In a low load operating region, only a single fuel injection is performed.

The present inventors have provided experiment results that break the aforementioned conventional common understanding. That is, the inventors have found that problems, such as increases in combustion noise and the like, hardly occur if the pilot injection of a very small amount needed to form a combustion environment is singly performed. Therefore, it has become possible to maintain the combustion environment for increasing the ignitability in cylinders without any substantial problem even during a stop of the main injection for producing the engine torque.

It is an object of the invention to provide, in a diesel engine that performs fuel injection in a split fashion, that is, performs a main injection and a pilot injection, a fuel injection control apparatus and a fuel injection control method capable of achieving a smooth transition from the split injection to the injection stop or a smooth restoration of the split injection from the injection stop.

This object is achieved by a fuel injection apparatus for a diesel engine according to claim 1 and a fuel injection control method for a diesel engine according to claim 5. Further advantageous aspects of the present invention are set out in the dependent claims.

The invention provides a fuel injection control apparatus for a diesel engine that performs a main injection in which a main amount of fuel for producing an engine torque is injected, and a pilot injection in which a very small amount of fuel for forming a combustion environment that increases an ignitability of fuel in a cylinder is injected, said apparatus comprising a fuel injection control means for executing the fuel injection in different modes individually for a plurality of regions set in accordance with an operational condition of the engine, wherein the plurality of regions associated with execution of the fuel injection by the fuel injection control means include:
(region I) a split injection region in which the pilot injection in which an amount of injection needed to form the combustion environment is secured is followed by the main injection;
(region II) a boundary region which is set between the split injection region and the injection stop region, and in which only the pilot injection in which the amount of injection needed to form the combustion environment is secured is executed; and
(region III) an injection stop region in which the fuel injection in the engine is entirely stopped.

In this construction, the transition between the "split injection region" in which the pilot injection is followed by the main injection and the "injection stop region" in which the fuel injection in the engine is stopped occurs always via the "boundary region" in which only the pilot injection in which a very small amount of fuel for forming a combustion environment that increases the ignitability of fuel in the cylinders is secured is executed. That is, in this construction, the pilot injection is continued after the main injection is stopped during the transition from the split injection to the injection stop, so that the ignition-promoting combustion environment is maintained in the cylinders until the fuel injection is stopped. During the restoration of the split injection from the injection stop, the pilot injection is restarted prior to the main injection, so that the main injection is restarted after the combustion environment has been secured.

Therefore, the control apparatus avoids singular execution of the main injection without the pilot injection, and ensures that the ignition-promoting combustion environment is provided at the time of execution of the main injection. As a result, the apparatus effectively curbs increases in combustion noise and occurrence of torque fluctuation associated with changes in the combustion environment.

Therefore, this construction makes it possible to achieve a smooth transition from the split injection to the injection stop or a smooth restoration of the split injection from the injection stop.

In the above-described aspect, the plurality of regions associated with execution of the fuel injection by the fuel injection control means may further include:
(region II-2) a transitional region which is set between the boundary region and the injection stop region, and in which the fuel injection is executed so that an amount of the pilot injection is gradually changed between "0" and the amount needed to form the combustion environment during a transition between the boundary region and the injection stop region.

In this construction, at the time of stop of the pilot injection during the transition from the split injection to the injection stop, the amount of pilot injection is gradually reduced from the amount needed to form the combustion environment to "0". At the time of restart of the pilot injection during the restoration of the split injection from the injection stop, the amount of pilot injection is gradually increased from "0" to the amount needed to form the combustion environment. By gradually changing the amount of pilot injection at the time of restart/stop of the pilot injection, the control apparatus curbs sharp changes in the combustion environment in the cylinders, and mitigates the problems associated with changes in the combustion environment, such as increases in combustion noise, occurrence of torque fluctuation, etc.

Therefore, this construction makes it possible to achieve a further smooth transition from the split injection to the injection stop or a further smooth restoration of the split injection from the injection stop.

The invention also provides a fuel injection control method for a diesel engine that performs a main injection in which a main amount of fuel for producing an engine torque is injected, and a pilot injection in which a very small amount of fuel for forming a combustion environment that increases an ignitability of fuel in a cylinder is injected, wherein an injection stop region in which the fuel injection is stopped in accordance with an operational condition of the diesel engine, and a split injection region in which the fuel injection is divisionally executed by executing the pilot injection and the main injection are set, and wherein the fuel injection is controlled in such a manner:
that during a transition from the injection stop region to the split injection region, the pilot injection in which an amount needed to form the combustion environment is secured is first started, and then the main injection is started, and
that during a transition from the split injection region to the injection stop region, the main injection is stopped while the pilot injection of the amount needed to form the combustion environment is continued, and then the pilot injection is stopped.

In this construction, the pilot injection is continued after the main injection is stopped during the transition from the split injection to the injection stop, so that the ignition-promoting combustion environment is maintained in the cylinders until the fuel injection is stopped. During the restoration of the split injection from the injection stop, the pilot injection is restarted prior to the main injection, so that the main injection is restarted after the combustion environment has been secured. Therefore, the control method avoids singular execution of the main injection without the pilot injection, and ensures that the ignition-promoting combustion environment is provided at the time of execution of the main injection. As a result, the method effectively curbs increases in combustion noise and occurrence of torque fluctuation associated with changes in the combustion environment.

Therefore, this construction makes it possible to achieve a smooth transition from the split injection to the injection stop or a smooth restoration of the split injection from the injection stop.

In the above-described aspect, at a time of start/stop of the pilot injection during the transition between the injection stop region and the split injection region, the fuel injection may be controlled so that the amount of the pilot injection is gradually increased/decreased between "0" and the amount needed to form the combustion environment.

With this construction, by gradually changing the amount of pilot injection at the time of restart/stop of the pilot injection during the transition between the split injection region and the injection stop region, the control method curbs sharp changes in the combustion environment in the cylinders, and mitigates the problems associated with changes in the combustion environment, such as increases in combustion noise, occurrence of torque fluctuation, etc.

Therefore, this construction makes it possible to achieve a further smooth transition from the split injection to the injection stop or a further smooth restoration of the split injection from the injection stop.

The foregoing and further objects, features and advantages of the present invention will become apparent from the following description of a preferred embodiment with reference to the accompanying drawings, wherein like numerals are used to represent like elements and wherein:
FIG. 1 is a schematic diagram illustrating a construction of a fuel injection control apparatus of a diesel engine according to an embodiment of the invention;
FIG. 2 is a flowchart illustrating a processing procedure of an "injection duration calculating routine in the embodiment;
FIG. 3 is a schematic diagram exemplifying a final-amount-of-injection determining map used in the injection duration calculating routine in the embodiment;
FIG. 4 is a schematic diagram exemplifying the region setting regarding the changing of the mode of injection in the embodiment;
FIG. 5 is a schematic diagram exemplifying an amount-of-pilot-injection determining map used in the routine;
FIG. 6 is a schematic diagram exemplifying the setting of regions with regard to the changing of the fashion of fuel injection in the embodiment;
FIGS. 7(a) to 7(h) are schematic diagrams indicating the transition of the fashion of fuel injection in the embodiment; and
FIGS. 8(a) to 8(g) are schematic diagrams indicating the transition of the fashion of fuel injection in a conventional fuel injection control apparatus.

An embodiment wherein the diesel engine fuel injection control apparatus of the invention is embodied will be described hereinafter in detail with reference to the accompanying drawings.

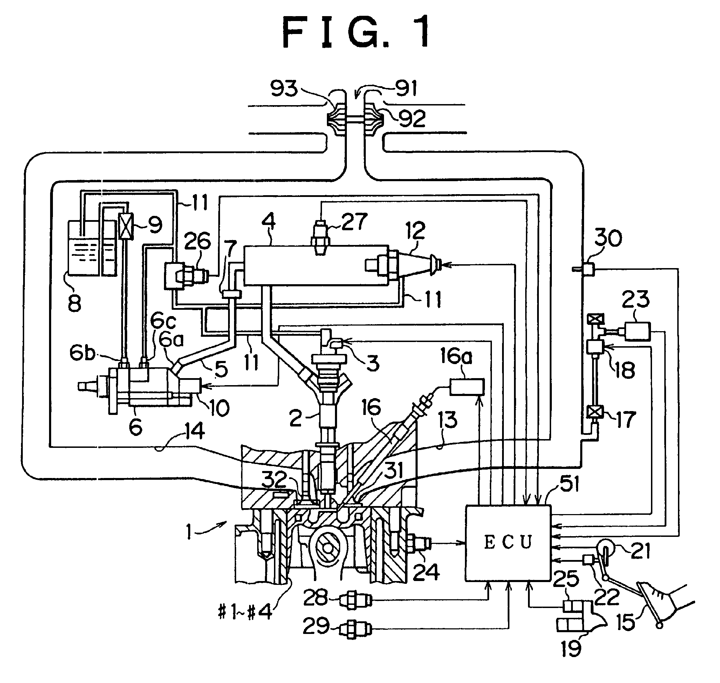

FIG. 1 is a schematic diagram illustrating a construction of a fuel injection control apparatus of an accumulator type diesel engine installed in vehicle. The construction of the diesel engine will be described with reference to FIG. 1.

The diesel engine 1 has a plurality of cylinders (four cylinders in the embodiment) #1-#4. Each cylinder #1-#4 is provided with an injector 2 that injects fuel into the combustion chamber of the cylinder. Fuel injection from the injectors 2 into the cylinders #1-#4 is controlled by turning injection control electromagnetic valves 3 on and off.

The injectors 2 are connected to a common rail 4 that is a common pressure-accumulator pipe for the cylinders. Basically, fuel in the common rail 4 is injected from each injector 2 into the corresponding one of the cylinders #1-#4 of the engine 1 while the corresponding injection control electromagnetic valve 3 is open. A relatively high pressure corresponding to the fuel injection pressure is continuously accumulated in the common rail 4. In order to accumulate such high-pressure fuel, the common rail 4 is connected to an ejection port 6a of a supply pump 6 via a supply pipe 5. A check valve 7 is provided in partway of the supply pipe 5. The check valve 7 allows fuel to be supplied from the supply pump 6 to the common rail 4, and restricts fuel from reversing from the common rail 4 to the supply pump 6.

The supply pump 6 is connected to a fuel tank 8 via an intake port 6b. A filter 9 is provided between the intake port 6b of the supply pump 6 and the fuel tank 8. The supply pump 6 draws fuel from the fuel tank 8 via the filter 9, and causes a plunger to reciprocate using a cam (not shown) that is driven synchronously with the revolution of the engine 1. The supply pump 6 thus raises the fuel pressure to a predetermined required pressure. The supply pump 6 supplies high-pressure fuel to the common rail 4.

A pressure control valve 10 is provided near the ejection port 6a of the supply pump 6. The pressure control valve 10 controls the pressure of fuel ejected from the ejection port 6a toward the common rail 4 (that is, controls the amount of fuel ejected). Upon receiving an on-signal, the pressure control valve 10 closes its valve body to allow supply of fuel from the ejection port 6a toward the common rail 4. Upon receiving an off-signal, the pressure control valve 10 opens its valve body to return excess fuel that is not ejected from the ejection port 6a, from a return port 6c of the supply pump 6 to the fuel tank 8 via a return pipe 11.

In this embodiment, the common rail 4 is provided with a relief valve 12. When a predetermined condition is met, the relief valve 12 is opened, so that high-pressure fuel in the common rail 4 is returned to the fuel tank 8 via the return pipe 11. The pressure in the common rail 4 is thus decreased.

In this embodiment, the injectors 2 are able to perform injection of a very small amount of fuel ("pilot injection") into the corresponding cylinders #1-#4 for forming a combustion environment that promotes ignition, before performing injection of a main amount of fuel ("main injection") for producing the engine output.

Furthermore, in the embodiment, an intake passage 13 and an exhaust passage 14 are connected to the combustion chambers of the diesel engine 1. The intake passage 13 is provided with a throttle valve (not shown). By opening and closing the throttle valve, the amount of flow of intake air introduced into the combustion chambers is adjusted.

The intake passage 13 is provided with a compressor 92 of a turbocharger 91 that forms a supercharger. The exhaust passage 14 is provided with a turbine 93 of the turbocharger 91. As well known, the turbocharger 91 uses energy from exhaust gas to turn the turbine 93, so that the compressor 92 coaxial with the turbine 93 turns to raise the pressure of intake air. Through this operation, high-density air is charged into the combustion chambers to allow combustion of large amounts of fuel, thereby increasing the output of the diesel engine 1.

A glow plug 16 is provided in each combustion chamber of the diesel engine 1. The glow plugs 16 are start-assist devices that are glowingly heated by feeding a current through a glow relay 1 immediately before the engine is started. A portion of fuel injected is sprayed to each heated glow plug 16 so as to promote ignition and combustion.

Various sensors and the like are provided on the diesel engine for detecting the state of the engine. The sensors and the like form state detection means in this embodiment. That is, an accelerator sensor 21 for detecting the amount of accelerator operation ACCP is provided near an accelerator pedal 15. Provided near the accelerator sensor 21 is a complete closure switch 22 that outputs a complete closure signal when the amount of depression of the accelerator peal 15 is zero.

An intake air pressure sensor 23 is connected to the intake passage 13 via a filter 17 and a vacuum switch valve (VSV) 18. Using the intake air pressure sensor 23, the pressure of intake air in the intake passage 13 (the charged pressure when intake air is supercharged by the turbocharger 91) is detected.

A water temperature sensor 24 for detecting the temperature of cooling water is provided in a cylinder block of the diesel engine 1.

The diesel engine 1 is also provided with a starter 19 for starting the engine 1. The starter 19 is provided with a starter switch 25 for detecting the state of operation of the starter 19. The starter switch 25 outputs an ON starter signal at the time of start of the diesel engine 1 when an ignition switch (not shown) is operated from an OFF position to a START position by a driving person and, as a result, the starter is operating (the cranking is being performed). When the ignition switch is returned from the START position to an ON position after the starting of the diesel engine 1 has been completed (or a complete combustion state has been established) or after the starting of the diesel engine 1 has been failed, the starter switch 25 outputs an OFF starter signal.

Furthermore, the return pipe 11 is provided with a fuel temperature sensor 26 for detecting the fuel temperature. The common rail 4 is provided with a fuel pressure sensor 27 for detecting the pressure of fuel in the common rail 4.

In this embodiment, a crank angle sensor 28 is provided near a pulser provided on a crankshaft (not shown) of the diesel engine 1. Rotation is transmitted from the crankshaft to a camshaft (not shown) for opening and closing intake valves 31 and exhaust valves 32, via a timing belt and the like. The camshaft is set so as to turn at half the rotational speed of the crankshaft. A cam angle sensor 29 is provided near a pulser provided on the camshaft. In this embodiment, based on pulse signals from the sensors 28, 29, the engine revolution speed ne is calculated, and the crank angle and the top dead center of each cylinder #1-#4 are calculated (cylinders are discriminated).

An intake air temperature sensor 30 for detecting the intake air temperature is provided near an air cleaner (not shown) provided at an inlet of the intake passage 13.

In this embodiment, an electronic control unit (ECU) 51 is provided for executing various controls of the diesel engine 1.

The ECU 51 inputs detection signals from the accelerator sensor 21, the intake air pressure sensor 23, the water temperature sensor 24, the fuel temperature sensor 26, the fuel pressure sensor 27, the crank angle sensor 28, the intake air temperature sensor 30, the complete closure switch 22, the starter switch 25, etc. Based on the detection signals, the ECU 51 suitably controls the electromagnetic valves 3, the pressure control valve 10, the relief valve 12, the VSV 18, etc. As a part of such engine control, the ECU 51 performs a fuel injection control.

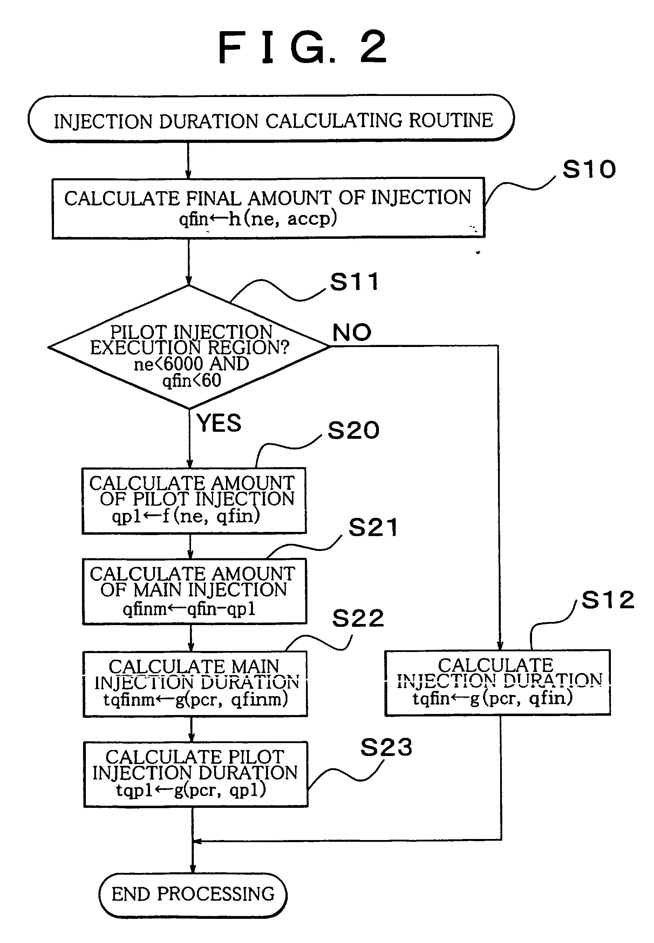

The fuel injection control executed by the ECU 51 will now be described with reference to FIGS. 2 to 7.

In this embodiment, the engine 1 performs the "normal injection" in which a needed amount of fuel is injected in a single action, and also performs "split injection" in which
a needed amount of fuel is injected in two separate stages, that is, the "main injection" and the "pilot injection".

The fuel injection control for the normal injection is performed as follows. For the fuel injection by the normal injection, the ECU 51 first calculates an amount of fuel injected ("final amount of fuel injected") and a fuel injection timing in accordance with the operational condition of the diesel engine 1. Furthermore, based on the injection pressure in accordance with the pressure of fuel accumulated in the common rail 4 and the engine revolution speed, the ECU 51 calculates a fuel injection duration that is needed to secure the calculated final amount of fuel injected.

When the calculated injection timing is reached, the ECU 51 opens the electromagnetic valve 3 of the corresponding injector 2, so as to start the injection of the high-pressure fuel from the common rail 4 into the corresponding cylinder #1-#4. After the needed amount of fuel is injected by maintaining the open state of the electromagnetic valve 3 for the calculated injection duration, the ECU 51 closes the electromagnetic valve 3 to end the fuel injection.

For the fuel injection by the split injection, the ECU 51 calculates a main amount of fuel injected and a pilot amount of fuel injected by distributing the calculated final amount of fuel injected for the two injections. Furthermore, the ECU 51 calculates injection durations for the two injections, that is, a pilot injection duration and a main injection duration, in accordance with the present engine revolution speed and the injection pressure. When the calculated injection timing is reached, the ECU 51 opens the electromagnetic valve 3 of the corresponding injector 2 for the pilot injection duration to inject the amount of pilot injection, that is, a very small amount of fuel, into the corresponding cylinder #1-#4. Subsequently, the ECU 51 temporarily closes the electromagnetic valve 3. After an appropriate duration of closing the electromagnetic valve 3, that is, temporarily stopping the fuel injection, the ECU 51 opens the electromagnetic valve 3 again to inject the main amount of fuel. After that, the ECU 51 ends the fuel injection.

FIG. 2 is a flowchart illustrating "injection duration calculating routine" of calculating an amount of fuel injected (injection duration) for a fuel injection as described above. The process of the "injection duration calculating routine" is periodically executed as an interrupt at every predetermined crank angle by the ECU 51.

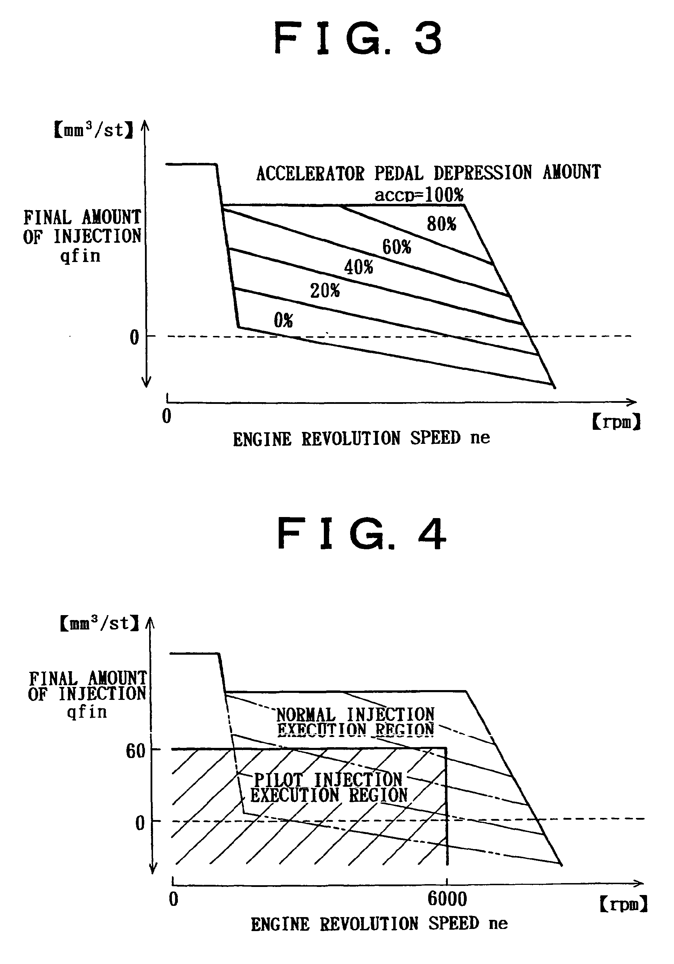

When the process proceeds to this routine, the ECU 51 first calculates a final amount of injection "Qfin" in accordance with the present operational condition of the diesel engine 1 in step 10. In this embodiment, the final amount of injection is determined with reference to a calculation map based on the engine revolution speed "ne" and the accelerator operation amount "accp" as exemplified in FIG. 3.

Subsequently in step 11, the ECU 51 determines whether the present operational condition of the engine 1 is in a region ("split injection execution region") that is pre-set for execution of the "split injection". In this embodiment, a region for executing "normal injection" ("normal injection execution region") and the split injection execution region are set as exemplified in FIG. 4. That is, a low-speed and low-load region where the engine revolution speed is less than 6000 [rpm] and the final amount of injection is less than 60 [cubic mm/st] is set as a "split injection execution region", and the other region is set as a "normal injection execution region".

If it is determined that the present operational condition is in the "normal injection execution region" ("NO" in step 11), the ECU 51 proceeds to step 12. In step 12, the ECU 51 calculates an injection duration "tqfin" that is needed to secure the calculated final amount of injection, in accordance with the present final amount of injection "qfin" and the injection pressure "pcr". After that, the ECU 51 temporarily ends the processing of the routine.

In this embodiment, the value of the injection duration [the main injection duration or the pilot injection duration if in the split injection execution range] is set to "0" if the calculated amount of injection is equal to or less than "0". In such a case, the corresponding fuel injection is not executed as can be naturally understood.

Conversely, if it is determined that the present engine operational condition is in the "split injection execution range" ("YES" in step 11), the ECU 51 proceeds to step 20.

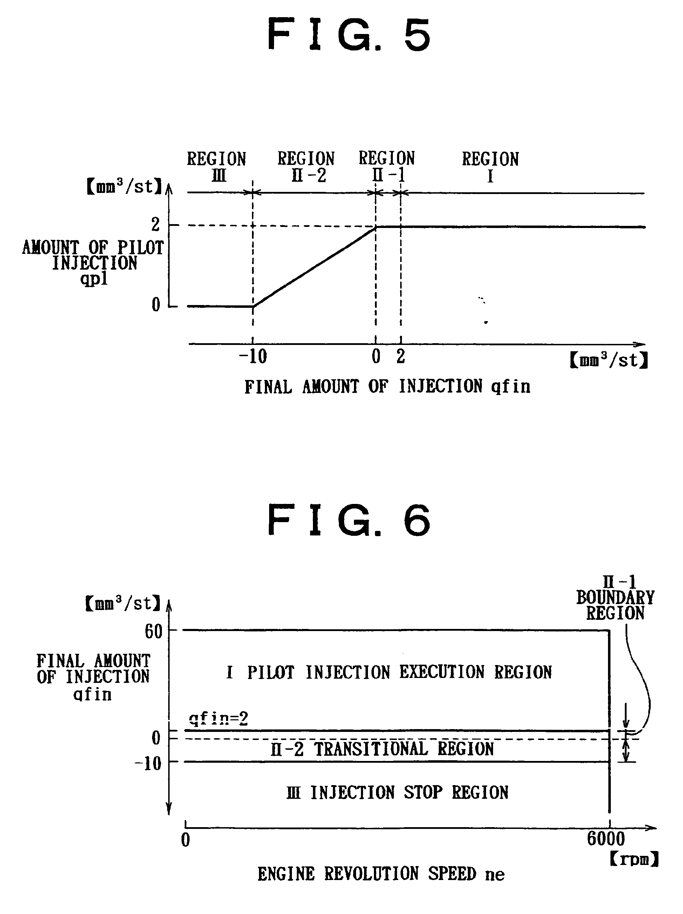

In step 20, the ECU 51 calculates an amount of pilot injection "qpl" in accordance with the present engine operational conditions, such as the final amount of injection, the present engine revolution speed, etc. In this embodiment, the amount of pilot injection is determined with reference to a calculation map exemplified in FIG. 5.

In this embodiment, if the final amount of injection is at least "0", the amount of pilot injection is set to "2" [cubic mm/st]. If the final amount of injection is at most "-10" [cubic mm/st], the amount of pilot injection is set to "0". If the final amount of injection is within the range of "-10" to "0" [cubic mm/st], the amount of pilot injection is gradually changed within the range of "0" to "2" [cubic mm/st] The value "2" [cubic mm/st] is set as an amount of pilot injection that is necessary and sufficient in order to form a combustion environment that promotes ignition, with consideration given to variations in injection from the injectors 2 of the diesel engine 1 of this embodiment.

Subsequently in step 21, the ECU 51 sets a value [qfin-qpl] obtained by subtracting the pilot injection from the calculated final amount of injection, as an amount of main injection [qfinm]. Subsequently in steps 22 and 23, the ECU 51 determines injection durations with regard to the amount of main injection and the amount of pilot injection determined as described above, that is, a main injection duration [tqfinm] and a pilot injection duration [tqpl], respectively, in accordance with the present engine revolution speed and the injection pressure. After that, the ECU 51 temporarily ends the processing of the routine.

Due to the above-described "injection duration calculating routine", it is possible to divide the "split injection execution range" into four regions indicated in FIG. 6, in accordance with different injection manners. As indicated in FIG. 6, the four regions are divided by:
- A line of "2" [cubic mm/st] in the final amount of injection where the amount of main injection becomes "0".
- A line of "0" in the final amount of injection where the amount of pilot injection starts to be reduced from the value "2" needed to form the aforementioned suitable combustion environment.
- A line of "-10" [cubic mm/st] in the final amount of fuel injected where the amount of pilot injection also becomes equal to or less than "0".

These regions will be described below.

### <Region I: "split injection region">

In region I, where the final amount of injection is greater than "2" [cubic mm/st], the amount of main injection, set as a value obtained by subtracting the amount of pilot injection from the final amount of injection, is reduced with decreases in the final amount of injection. For the amount of pilot injection in this region, an amount of "2" [cubic mm/st] needed to form the suitable combustion environment is secured. In this region, therefore, the "split injection" wherein the "pilot injection" with the amount of injection needed to form the suitable combustion environment is followed by the "main injection", is executed.

### <Region II-1: "boundary region">

In a region where the final amount of injection is at least "0" but at most "2" [cubic mm/st], the amount of injection becomes equal to or less than "0", and the main injection is stopped. However, the amount of injection of "2" [cubic mm/st] needed to form the suitable combustion environment is secured for the pilot injection. Therefore, in the region where the final amount of injection is within the range of "0" to "2" [cubic mm/st], only the pilot injection of the amount needed to form the suitable combustion environment is executed. In this region, the main injection is not performed, so that the diesel engine 1 produces substantially no output. However, the state where the suitable combustion environment is formed in the cylinders is maintained.

### <Region II-2: "transitional region">

When the final amount of injection becomes less than "0", the amount of pilot injection is gradually reduced from "2" [cubic mm/st], which is needed to form the suitable combustion environment. In a region down to a final amount of injection of "-10" [cubic mm/st], at which the amount of pilot injection becomes equal to "0", the amount of pilot injection is gradually changed within the range between "0" and "2" [cubic mm/st].

### <Region III: "injection stop region">

When the final amount of injection becomes equal to or less than "-10" [cubic mm/st], the amount of pilot injection becomes equal to or less than "0", besides the amount of main injection. Therefore, in this region, the fuel injection is entirely stopped.

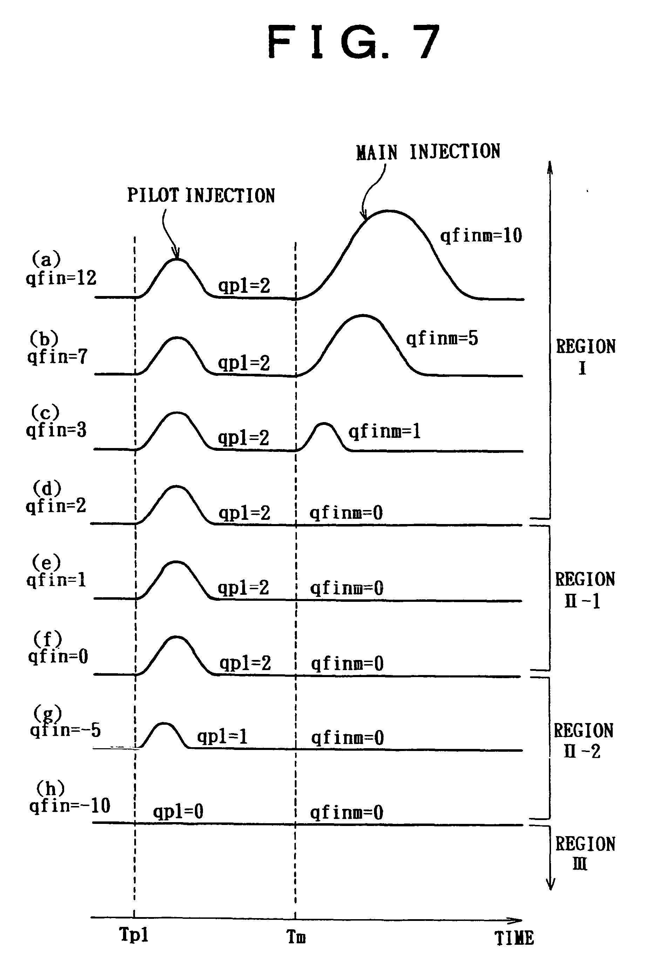

FIGS. 7(a) to 7(h) indicate transition of the fashion of fuel injection from the split injection to the injection stop or from the injection stop to restoration of the split injection, in the embodiment with the above-described region setting.

During the process from the split injection to the injection stop, the fashion of fuel injection changes with decreases in the final amount of injection, in the order of FIG. 7(a) to FIG. 7(h). That is:
- While the pilot injection with an effective amount of injection secured is maintained, the amount of main injection is reduced together with the final amount of injection so as to stop the main injection while maintaining the suitable combustion environment [FIGS. 7(a) to 7(d)]
- For a while after the stop of the main injection, the pilot injection of the effective amount is singly executed so as to maintain the suitable combustion environment in the cylinders [FIGS. 7(d) to 7(f)]
- After that, the amount of pilot injection is gradually reduced together with the final amount of injection until the pilot injection is stopped. Thus, the fuel injection is entirely stopped [FIGS. 7(f) to 7(h)]

During the process from the injection stop to restoration of the split injection, the fashion of fuel injection changes with increases in the final amount of injection, in the reversed order, that is, the order of FIG. 7(h) to FIG. 7(a). That is:
- From the complete stop of fuel injection, the pilot injection is first restarted. The amount of pilot injection is gradually increased from "0" to the effective amount of injection with increases in the final amount of injection [FIGS. 7(h) to 7(f)].
- After the amount of pilot injection is increased to the effective amount of injection, the pilot injection is continued with that amount of injection for a while, thereby reliably forming the suitable combustion environment [FIGS. 7(f) to 7(d)].
- After the suitable combustion environment has been formed in the cylinders, the main injection is restarted [FIGS. 7(d) to 7(a)].

Thus, the diesel engine fuel injection control apparatus of this embodiment reliably secures the suitable combustion environment in the cylinders at the time of stop/restart of the main injection during the transition from the split injection, in which the pilot injection is executed prior to the main injection, to the injection stop, and during the restoration of the split injection from the injection stop.

As can be understood from the foregoing description, the diesel engine fuel injection control apparatus of this embodiment achieves the following advantages.

In this embodiment, the "boundary region (II-1)" in which only the pilot injection is performed while securing an amount of injection needed to form the suitable combustion environment is set in a region between the "split injection region (I)" in which the pilot injection is followed by the main injection and the "injection stop region (III)" in which the fuel injection in the engine is stopped. During the transition from the split injection to the injection stop, the main injection is first stopped while the pilot injection in which the amount of injection needed to form the suitable combustion environment is secured is maintained. After that, the pilot injection is stopped. For the restoration of the split injection from the injection stop, the pilot injection with the secured effective amount of injection is restarted. After that, the main injection is restarted. Thus, the apparatus avoids the execution of the main injection alone without the suitable combustion environment formed in the cylinders. Hence, the suitable combustion environment is always secured at the time of execution of the main injection, thereby effectively reducing the problems associated with changes of the combustion environment, such as increases in combustion noise, occurrence of torque fluctuation, etc. Consequently, the embodiment achieves smooth transition from the split injection to the injection stop, and smooth restoration of the split injection from the injection stop.

In this embodiment, the "transitional region (II-2)" in which fuel injection is performed in such a manner that the amount of pilot injection is gradually changed between "0" and an amount of pilot injection needed to form the suitable combustion environment (e.g., "2" [cubic mm/st]) is set between the "boundary region" and the "injection stop region". At the time of restart/change of the pilot injection during transition between the "boundary region" and the "injection stop region", the fuel injection control is performed so that the amount of pilot injection is gradually increased/decreased between "0" and the aforementioned effective amount. Therefore, the embodiment mitigates sharp changes of the combustion environment in the cylinders at the time of restart/stop of the pilot injection, and therefore further effectively reduces the problems associated with changes of the combustion environment, such as increases in combustion noise, occurrence of torque fluctuation, etc.

The above-described diesel engine fuel injection control apparatus of the embodiment may be modified as follows.

The values, the fashion of the calculation maps, the set ranges of the various injection regions related to the fuel injection control, and the like in the foregoing embodiment are arbitrary, and may be suitably changed in accordance with the characteristics of the diesel engine to which the fuel injection control apparatus is applied, without departing from the spirit of the invention.

The methods of determining the final amount of injection, the amount of main injection, and the amount of pilot injection, or their corresponding injection durations, are arbitrary. That is, these methods are not limited to the methods of the embodiment, but may be suitably changed. As long as at the time of stop/restart of the main injection during the transition from the split injection to the injection stop and during the restoration of the split injection from the injection stop, the effective pilot injection is maintained so that a suitable combustion environment is secured in the cylinders without a fail, it is possible to effectively reduce the problems associated with changes in the combustion environment, such as increases in combustion noise, occurrence of torque fluctuation, etc., so as to achieve the transition and restoration mentioned above in a smooth manner.

In the foregoing embodiment, the regions associated with changes of the fashion of fuel injection during the transition from the split injection to the injection stop or during the restoration of the split injection from the injection stop, that is, the "boundary region" and the "transitional region", are divided and set using the final amount of injection "qfin" as a parameter. However, the regions may also be divided and set using any other suitable parameter, for example, time or the like. For example, if the fashion of fuel injection is changed from the split injection to the injection stop in accordance with the engine operational condition, the fuel injection control may be performed in the following procedure:
- At the time point when the aforementioned transition is recognized based on the engine operational condition, the main injection is first stopped while the pilot injection of the effective amount is maintained.
- For a subsequent predetermined time, the pilot injection of the effective amount is maintained ("boundary region").
- After the elapse of the predetermined time following the aforementioned recognition, the amount of pilot injection is gradually reduced over time, and the pilot injection is eventually stopped ("transitional region").

Conversely, for the restoration of the split injection from the injection stop, the fuel injection control is performed in the following procedure:
- At the time point when the restoration is recognized based on the engine operational condition, the pilot injection is first restarted. The amount of pilot injection is gradually increased from "0" to the aforementioned effective amount as time elapses ("transitional region").
- For a predetermined time following the time when the amount of pilot injection increases to the effective amount, the pilot injection of the effective amount is maintained, thereby securing a state where a suitable combustion environment is formed in the cylinders ("boundary region").
- After the pilot injection of the effective amount is maintained for the predetermined time, the main injection is restarted.

The setting of the various regions using a parameter such as time or the like also achieves the advantages substantially the same as or similar to those of the foregoing embodiment.

Although in the foregoing embodiment, the same boundaries between the regions are used during the transition from the split injection to the injection stop and during the restoration of the split injection from the injection stop, it is also possible to set different region boundaries for the transition to the injection stop and for the restoration of the split injection. For example, boundaries may be set such that a hysteresis for preventing control hunting may be provided in each region.

Furthermore, during the transition from the split injection to the injection stop, as for example, as long as the pilot injection of the effective amount is maintained until the main injection is stopped, the above-stated advantages can be sufficiently achieved without providing the boundary regions. However, during the restoration of the split injection from the injection stop, it is necessary to provide a suitable combustion environment before the main injection is restarted. Unless the pilot injection of the effective amount is restarted a certain time prior to the restart of the main injection, the aforementioned advantages may not be sufficiently achieved. In such a case, the "boundary region" for the restoration of the split injection may be set wider than the "boundary region" for the transition to the injection stop.

Although in the foregoing embodiment, the "transitional region" is set between the "boundary region" and the "injection stop region" and, during the "transitional region", the amount of pilot injection is gradually changed between "0" and the effective amount, it is possible to omit the "transitional region". That is, it is possible to adopt a construction in which only the "boundary region" is set between the "split injection region" and the "injection stop region". This construction also reliably avoids singular execution of the main injection during a state where a suitable combustion environment is not formed. Therefore, this construction is also able to reduce effectively to some extent the problems associated with changes in the combustion environment during the transition from the split injection to the injection stop or during the restoration of the split injection from the injection stop.

While the present invention has been described with reference to what is presently considered to be a preferred embodiment thereof, it is to be understood that the invention is not limited to the disclosed embodiment or constructions. To the contrary, the invention is intended to cover various modifications and equivalent arrangements within the scope of the appended claims.

An electronic control unit 51 sets a split injection region in which fuel injection is divisionally performed by performing main injection and pilot injection, and an injection stop region in which fuel injection is stopped, in accordance with operational conditions of a diesel engine 1, and performs fuel injection control based on the opening and closing operation of the electromagnetic valves 3 of injectors 2. A boundary region in which only the pilot injection with an effective amount of injection secured is performed is set in a region between the split injection region and the injection stop region. This region setting avoids execution of only the main injection in a state where the pilot injection is not performed and therefore a suitable combustion environment is not secured.

## Claims

1. A fuel injection control apparatus for a diesel engine (1) that performs a main injection in which a main amount of fuel for producing an engine torque is injected, and a pilot injection, in which a very small amount of fuel for forming a combustion environment is injected, that increases an ignitability of fuel in a cylinder (#1 - #4),
the fuel injection control apparatus comprises fuel injection control means for executing the fuel injection in different modes individually for a plurality of regions set in accordance with an operational condition of the engine (1),
wherein the plurality of regions associated with execution of the fuel injection by the fuel injection control means include
(region I) a split injection region in which the pilot injection in which an amount of injection needed to form the combustion environment is secured is followed by the main injection; and
(region III) an injection stop region in which the fuel injection in the engine (1) is entirely stopped,
**wherein**
the plurality of regions associated with execution of the fuel injection by the fuel injection control means further includes
(region II) a boundary region which is set between the split injection region and the injection stop region, and in which only the pilot injection is executed, in which the amount of injection needed to form the combustion environment is secured and substantially no output of the engine is produced.

2. A fuel injection control apparatus according to claim 1, **characterized in that** the plurality of regions associated with execution of the fuel injection by the fuel injection control means further includes:
(region II-2) a transitional region which is set between the boundary region and the injection stop region, and in which the fuel injection is executed so that an amount of the pilot injection is gradually changed between "0" and the amount needed to form the combustion environment during a transition between the boundary region and the injection stop region.

3. A fuel injection control apparatus according to claim 1, **characterized in that** the regions are divided and set by using an engine revolution speed and an accelerator pedal depression amount as parameters.

4. A fuel injection control apparatus according to claim 1, **characterized in that** the regions are divided and set by using a fuel injection duration as a parameter.

5. A fuel injection control method for a diesel engine (1) that performs a main injection in which a main amount of fuel for producing an engine torque is injected, and a pilot injection in which a very small amount of fuel for forming a combustion environment is injected, that increases an ignitability of fuel in a cylinder (#1 - #4), the fuel injection control method comprises an injection stop region in which the fuel injection is stopped in accordance with an operational condition of the diesel engine (1), and a split injection region in which the fuel injection is divisionally executed by executing the pilot injection and the main injection are set,
**wherein**
the fuel injection is controlled in such a manner:
that during a transition from the injection stop region to the split injection region, the pilot injection is first started, in which an amount needed to form the combustion environment is secured and substantially no output of the engine is produced, and then the main injection is started, and
that during a transition from the split injection region to the injection stop region, the main injection is stopped while the pilot injection of the amount needed to form the combustion environment is continued, in which substantially no output of the engine is produced, and then the pilot injection is stopped.

6. A fuel injection control method according to claim 5, **characterized in that** at a time of start/stop of the pilot injection during the transition between the injection stop region and the split injection region, the fuel injection is controlled so that the amount of the pilot injection is gradually increased/decreased between "0" and the amount needed to form the combustion environment.

7. A fuel injection control method according to claim 5, **characterized in that** the regions are divided and set by using an engine revolution speed and an accelerator pedal depression amount as parameters.

8. A fuel injection control method according to claim 5, **characterized in that** the regions are divided and set by using a fuel injection duration as a parameter.

## Patentansprüche

1. Kraftstoffeinspritzsteuergerät für eine Dieselkraftmaschine (1), das eine Haupteinspritzung, bei der eine Hauptkraftstoffmenge zum Erzeugen eines Kraftmaschinenmomentes eingespritzt wird, und eine Voreinspritzung durchführt, bei der eine sehr kleine Kraftstoffmenge zum Erzeugen einer Verbrennungsumgebung eingespritzt wird, die eine Zündbarkeit des Kraftstoffes in einem Zylinder (#1 bis #4) erhöht,
wobei das Kraftstoffeinspritzsteuergerät eine Kraftstoffeinspritzsteuereinrichtung zum Ausführen der Kraftstoffeinspritzung in unterschiedlichen Modi individuell für eine Vielzahl Bereiche aufweist, die gemäß einem Betriebszustand der Kraftmaschine (1) festgelegt sind,
wobei die Vielzahl Bereiche, die mit der Ausführung der Kraftstoffeinspritzung durch die Kraftstoffeinspritzsteuereinrichtung verknüpft sind, folgendes aufweist:
(Bereich I) einen Bereich mit geteilter Einspritzung, in dem die Voreinspritzung, bei der eine zum Ausbilden der Verbrennungsumgebung erforderliche Einspritzmenge gewährleistet wird, von der Haupteinspritzung gefolgt wird; und
(Bereich III) einen Bereich zum Stoppen der Einspritzung, in dem die Kraftstoffeinspritzung in die Kraftmaschine (1) vollständig gestoppt wird, wobei
die Vielzahl Bereiche, die mit der Ausführung der Kraftstoffeinspritzung durch die Kraftstoffeinspritzsteuereinrichtung verknüpft sind, des Weiteren folgendes aufweist:
(Bereich II) ein Grenzbereich, der zwischen dem Bereich mit geteilter Einspritzung und dem Bereich zum Stoppen der Einspritzung festgelegt ist und in dem nur die Voreinspritzung ausgeführt wird, bei der die zum Ausbilden der Verbrennungsumgebung erforderliche Einspritzmenge gewährleistet wird und bei der im Wesentlichen keine Abgabe der Kraftmaschine erzeugt wird.

2. Kraftstoffeinspritzsteuergerät gemäß Anspruch 1, **dadurch gekennzeichnet, dass** die Vielzahl Bereiche, die mit der Ausführung der Kraftstoffeinspritzung durch die Kraftstoffeinspritzsteuereinrichtung verknüpft sind, des Weiteren folgendes aufweist:
(Bereich II - 2) einen Übergangsbereich, der zwischen dem Grenzbereich und dem Bereich zum Stoppen der Einspritzung festgelegt ist und in dem die Kraftstoffeinspritzung so ausgeführt wird, dass eine Voreinspritzmenge zwischen "0" und der zum Ausbilden der Verbrennungsumgebung erforderlichen Menge während eines Übergangs zwischen dem Grenzbereich und dem Bereich zum Stoppen der Einspritzung allmählich geändert wird.

3. Kraftstoffeinspritzsteuergerät gemäß Anspruch 1, **dadurch gekennzeichnet, dass** die Bereiche unter Verwendung einer Kraftmaschinendrehzahl und eines Beschleunigungspedalniederdrückungsbetrages als Parameter eingeteilt und festgelegt sind.

4. Kraftstoffeinspritzsteuergerät gemäß Anspruch 1, **dadurch gekennzeichnet, dass** die Bereiche unter Verwendung einer Kraftstoffeinspritzdauer als ein Parameter eingeteilt und festgelegt sind.

5. Kraftstoffeinspritzsteuerverfahren für eine Dieselkraftstoffmaschine (1), das eine Haupteinspritzung, bei der eine Hauptkraftstoffmenge zum Erzeugen eines Kraftmaschinenmomentes eingespritzt wird, und eine Voreinspritzung durchführt, bei der eine sehr kleine Kraftstoffmenge zum Ausbilden einer Verbrennungsumgebung eingespritzt wird, die eine Zündbarkeit des Kraftstoffes in einem Zylinder (#1 bis #4) erhöht,
wobei das Kraftstoffeinspritzsteuerverfahren einen Bereich zum Stoppen der Einspritzung, in dem die Kraftstoffeinspritzung gemäß einem Betriebszustand der Dieselkraftmaschine (1) gestoppt wird, und einen Bereich mit geteilter Einspritzung beinhaltet, in dem die Kraftstoffeinspritzung in geteilter Weise durch Ausführen der Voreinspritzung und der Haupteinspritzung ausgeführt wird,
wobei die Kraftstoffeinspritzung in der folgenden Art und Weise gesteuert wird:
dass während eines Übergangs von dem Bereich zum Stoppen der Einspritzung zu dem Bereich mit geteilter Einspritzung die Voreinspritzung zuerst gestartet wird, bei der eine zum Ausbilden der Verbrennungsumgebung erforderliche Menge gewährleistet wird und bei der im Wesentlichen keine Abgabe von der Kraftmaschine erzeugt wird, und dass dann die Haupteinspritzung gestartet wird und
dass während eines Überganges von dem Bereich mit geteilter Einspritzung zu dem Bereich zum Stoppen der Einspritzung die Haupteinspritzung gestoppt wird, während die Voreinspritzung mit der zum Ausbilden der Verbrennungsumgebung erforderlichen Menge fortgesetzt wird, bei der im Wesentlichen keine Abgabe der Kraftmaschine erzeugt wird, und dass dann die Voreinspritzung gestoppt wird.

6. Kraftstoffeinspritzsteuerverfahren gemäß Anspruch 5, **dadurch gekennzeichnet, dass** zu einer Zeit eines Startes/Stopps der Voreinspritzung während des Übergangs zwischen dem Bereich zum Stoppen der Einspritzung und dem Bereich mit geteilter Einspritzung die Kraftstoffeinspritzung so gesteuert wird, dass die Voreinspritzmenge zwischen "0" und der zum Ausbilden der Verbrennungsumgebung erforderlichen Menge allmählich vermehrt/verringert wird.

7. Kraftstoffeinspritzsteuerverfahren gemäß Anspruch 5, **dadurch gekennzeichnet, dass** die Bereiche unter Verwendung einer Kraftmaschinendrehzahl und eines Beschleunigungspedalniederdrückungsbetrages als Parameter eingeteilt und festgelegt werden.

8. Kraftstoffeinspritzsteuerverfahren gemäß Anspruch 5, **dadurch gekennzeichnet, dass** die Bereiche unter Verwendung einer Kraftstoffeinspritzdauer als ein Parameter eingeteilt und festgelegt werden.

## Revendications

1. Appareil de contrôle de l'injection de carburant pour un moteur diesel (1) qui effectue une injection principale dans laquelle une quantité principale de carburant servant à produire un couple moteur est injectée, et une injection pilote, dans laquelle une très petite quantité de carburant servant à former un environnement de combustion est injectée, qui augmente l'allumabilité du carburant dans un cylindre (No.1 à No.4),
l'appareil de contrôle d'injection de carburant comprend un moyen de contrôle d'injection de carburant servant à exécuter l'injection de carburant selon différents modes individuellement pour une pluralité de régions établies en fonction d'une condition de fonctionnement du moteur à combustion (1),
dans lequel la pluralité de régions associées à l'exécution de l'injection de carburant par le moyen de contrôle d'injection de carburant comprend
(région I) une région d'injection divisée dans laquelle l'injection pilote dans laquelle est assurée la quantité d'injection nécessaire pour former l'environnement de combustion environnement est suivie de l'injection principale ; et
(région III) une région d'arrêt d'injection dans laquelle l'injection de carburant dans le moteur (1) est complètement arrêtée,
**dans lequel**
la pluralité de régions associées à l'exécution de l'injection de carburant par le moyen de contrôle d'injection de carburant comprend en outre
(région II) une région frontalière qui est établie entre la région d'injection divisée et la région d'arrêt d'injection, et dans laquelle seule l'injection pilote est exécutée, dans laquelle la quantité d'injection nécessaire pour former l'environnement de combustion est assurée et sensiblement aucun rendement-moteur n'est produit par le moteur.

2. Appareil de contrôle d'injection de carburant selon la revendication 1, **caractérisé en ce que** la pluralité de régions associées à l'exécution de l'injection de carburant par le moyen de contrôle d'injection de carburant comprend en outre
(région II-2) une région de transition qui est établie entre la région frontalière et la région d'arrêt d'injection, et dans laquelle l'injection de carburant est exécutée de sorte qu'une quantité de l'injection pilote est modifiée progressivement entre "0" et la quantité nécessaire pour former l'environnement de combustion au cours d'une transition entre la région frontalière et la région d'arrêt d'injection.

3. Appareil de contrôle d'injection de carburant selon la revendication 1, **caractérisé en ce que** les régions sont divisées et établies en utilisant comme paramètres une vitesse de rotation du moteur et une quantité d'enfoncement de pédale d'accélérateur.

4. Appareil de contrôle d'injection de carburant selon la revendication 1, **caractérisé en ce que** les régions sont divisées et établies en utilisant une durée d'injection de carburant comme paramètre.

5. Procédé de contrôle de l'injection de carburant pour un moteur diesel (1) qui effectue une injection principale dans laquelle une quantité principale de carburant servant à produire un couple moteur est injectée, et une injection pilote, dans laquelle une très petite quantité de carburant servant à former un environnement de combustion est injectée, qui augmente l'allumabilité du carburant dans un cylindre (No.1 à No.4),
le procédé de contrôle d'injection de carburant comprend une région d'arrêt d'injection dans laquelle l'injection de carburant est arrêtée en fonction d'une condition de fonctionnement du moteur diesel (1), et une région d'injection divisée dans laquelle l'injection de carburant est exécutée de manière divisée en exécutant l'injection pilote et l'injection principale,
**dans lequel**
l'injection de carburant est commandée de sorte
que pendant une transition de la région d'arrêt d'injection à la région d'injection divisée, l'injection pilote est démarrée la première, dans laquelle une quantité nécessaire pour former l'environnement de combustion est assurée et sensiblement aucun rendement-moteur n'est produit par le moteur, et ensuite l'injection principale est lancée, et
que pendant une transition de la région d'injection divisée à la région d'arrêt d'injection, l'injection principale est arrêtée alors que l'injection pilote de la quantité nécessaire pour former l'environnement de combustion est poursuivie, dans laquelle sensiblement aucun rendement-moteur n'est produit par le moteur, et ensuite l'injection pilote est arrêtée.

6. Procédé de contrôle d'injection de carburant selon la revendication 5, **caractérisé en ce qu'**au moment du démarrage/arrêt de l'injection pilote pendant la transition entre la région d'arrêt d'injection et la région d'injection divisée, l'injection de carburant est commandée de sorte que la quantité de l'injection pilote diminue/augmente progressivement entre "0" et la quantité nécessaire pour former l'environnement de combustion.

7. Procédé de contrôle d'injection de carburant selon la revendication 5, **caractérisé en ce que** les régions sont divisées et établies en utilisant comme paramètres une vitesse de rotation du moteur et une quantité d'enfoncement de pédale d'accélérateur.

8. Procédé de contrôle d'injection de carburant selon la revendication 5, **caractérisé en ce que** les régions sont divisées et établies en utilisant une durée d'injection de carburant comme paramètre.
